# FASCICULE DE BREVET EUROPEEN

(11) **EP 4 436 873 B1**
(45) Date de publication et mention de la délivrance du brevet: **14.01.2026**
(21) Numéro de dépôt: 22821872.3
(22) Date de dépôt: 18.11.2022
(51) Int. Cl.: B64C 1/14, E05F 11/54

(54) **MÉCANISME DE VERROUILLAGE DES POIGNÉES DE PORTE D'AERONEF À ECHAPPEMENT LATERAL DES BUTÉES**
VERRIEGELUNGSMECHANISMUS FÜR TÜRGRIFFE VON FLUGZEUGEN MIT SEITLICHER NOTÖFFNUNG DER HALTEPUNKTE
MECHANISM FOR LOCKING AIRCRAFT DOOR HANDLES WITH LATERAL ESCAPE OF THE STOPS

(30) Priorité: 26.11.2021 FR 2112559
(43) Date de publication de la demande: 02.10.2024
(73) Titulaire: Latecoere, 31500 Toulouse (FR)
(72) Inventeur: BORIES, Xavier, 31500 TOULOUSE (FR)
(74) Mandataire: Junca, Eric
(86) Numéro de dépôt international: PCT/EP2022/082513
(87) Numéro de publication internationale: WO 2023/094289

(56) Documents cités:
- WO-A1-2020/253985
- CN-A- 106 677 612
- FR-A1- 3 087 189
- US-A- 4 560 123
- US-A1- 2021 332 624

## Description

L'invention se rapporte à un mécanisme destiné à assurer le verrouillage et/ou le blocage des poignées de porte d'aéronef agencée dans une ouverture de fuselage et pourvue de butées à échappement latéral. L'invention se rapporte, plus précisément, à une porte d'aéronef équipée de ce mécanisme, à un procédé d'ouverture de cette porte et à un aéronef pourvu d'une telle porte.

Plus particulièrement, cette invention s'applique aux poignées de portes d'aéronef dites « *semi-plug* » (en terminologie anglaise), c'est-à-dire aptes à traverser leur encadrement à l'occasion de leur ouverture et de leur fermeture.

Les fuselages d'aéronef sont généralement pourvus d'ouvertures obturées par des portes équipées d'une ou plusieurs poignées d'actionnement et de systèmes destinés à assurer une fermeture sûre et étanche de ces ouvertures tout en étant rapides et simples à manœuvrer par le personnel naviguant.

En outre, la résistance de la porte à la différence de pression entre l'intérieur et l'extérieur de l'habitacle de l'aéronef est avantageusement réalisée au moyen de butées installées à la fois sur des pourtours de la porte et à la périphérie de son encadrement de fuselage, ces butées coopérant entre elles.

Parmi les différents systèmes d'ouverture/fermeture de porte d'aéronef existant, l'invention se rapporte plus particulièrement au système dit à échappement latéral des butées qui est décrit, notamment, dans le document de brevet FR1859376.

Ce système permet d'effectuer, dans un premier temps, le pivotement de la porte autour d'un axe virtuel passant par sa médiane verticale entraînant la sortie des butées latérales de leur logement dans l'encadrement. Puis, dans un deuxième temps, ce pivotement se poursuit tout en étant accompagné d'une phase de translation circulaire (appelée *« swivelling »* en terminologie anglaise) dans un plan horizontal confondu avec le plan du mouvement d'échappement des butées. Cette translation entraîne la porte jusqu'à sa position finale de pleine ouverture dans laquelle sa face interne est encore tournée vers le fuselage.

Ainsi, avec un tel système, la cinématique des mouvements de la porte par rapport au fuselage se déroule, depuis son encadrement, dans un plan principal horizontal défini par au moins un bras de manipulation relié à l'encadrement et couplé, via une charnière, à un avant-bras d'articulation sur la porte.

En outre, la porte comprend un axe permettant la rotation d'une poignée d'actionnement, dans un plan parallèle au plan de pivotement du bras, entre une position de fermeture de la porte et une position de fin de course correspondant à son ouverture partielle.

La cinématique du bras se décompose également en deux phases bien distinctes : une première phase complexe lors de l'échappement latéral des butées, suivie d'une seconde phase de simple rotation lors de la translation circulaire de la porte pendant laquelle la poignée doit rester dans une position fixe par rapport à la porte afin d'éviter toute interaction néfaste avec le déplacement de la porte. En effet, si la poignée est tournée alors que la porte est dans sa phase de translation circulaire, le mécanisme de la porte risque de se désynchroniser et d'interdire potentiellement la re-fermeture, voire d'amener la porte à percuter le fuselage puisque, l'avant-bras étant débloqué, la porte va se décaler et ne sera plus parallèle au fuselage.

Toutefois, puisque la cinématique de la porte consiste en un déplacement de son encadrement vers l'extérieur du fuselage, c'est-à-dire, d'arrière en avant, l'arbre qui est lié à la poignée reste dans les limites intérieures de la porte et ne peut donc être bloqué par un mécanisme à levier qui viendrait le contraindre en étant lié à l'encadrement. En effet, pendant la phase d'échappement des butées, la porte se décale vers l'extérieur et ne se trouve donc déjà plus dans l'alignement du fuselage.

Le document US 2021/0332624 décrit un bras de porte d'aéronef, ce bras étant équipé d'un mécanisme simplifié d'ouverture comportant une came de guidage qui permet une ouverture latérale en translation circulaire de la porte.

### EXPOSE DE L'INVENTION

Dans ce contexte, l'invention a pour objectif principal d'assurer le blocage ou l'immobilisation des poignées d'actionnement d'une porte d'aéronef à échappement latéral des butées au moyen d'un mécanisme de verrouillage spécifique permettant de maintenir les poignées en position de fin de course depuis la fin de la phase de dégagement des butées et durant tout le pivotement de la porte lors de sa translation circulaire et sans imposer de contraintes à son arbre principal.

Ce but est atteint, selon l'invention, au moyen d'une porte d'aéronef conformément à la revendication 1.

D'autres modes de réalisation particuliers de l'invention sont définis dans les revendications 2 à 9.

Une application de l'objet de l'invention est un aéronef comportant au moins une porte à échappement latéral des butées telle que définie dans la revendication 10.

Un dernier objet de l'invention est un procédé d'ouverture réversible d'une porte d'aéronef à échappement latéral des butées équipée d'au moins une poignée d'actionnement et d'un mécanisme tel que défini dans la revendication 11. Dans ce procédé la poignée est tournée autour de son axe depuis sa position de repos correspondant à la fermeture de la porte jusqu'à sa position de fin de course correspondant à la fin de la phase d'échappement des butées, puis un pivotement du bras dans un plan parallèle à celui de la poignée pour assurer la translation circulaire de la porte jusqu'à ce qu'elle atteigne sa position d'ouverture complète, les pions se trouvant, pendant ce pivotement, en vis-à-vis des rampes pour bloquer toute rotation de la poignée.

Le mécanisme de verrouillage de l'invention assure, avec des moyens simples et économiques, un blocage efficace de la poignée d'actionnement durant toute la phase de translation circulaire de la porte après l'échappement latéral des butées.

Le mécanisme de l'invention s'affranchit de toute pièce mobile ou autre roulement et de moyen de rappel de type ressort. Par conséquent, la fiabilité est accrue par rapport aux solutions techniques traditionnelles du fait de l'absence de risque de grippage ou de rupture de telles pièces. En outre, le gain de masse procuré par l'invention est significatif.

De plus, avec l'invention, il n'existe aucun contact entre le bras et la poignée pendant le déroulement normal de l'ouverture de la porte, sauf en cas d'actionnement, volontaire ou accidentelle, de la poignée pendant la translation circulaire de la porte. Dans ces conditions, le risque d'usure du mécanisme est très faible, voire inexistant.

Enfin, l'invention se suffit à elle-même et il n'est plus nécessaire pour bloquer la poignée d'actionnement de rajouter des pièces sur l'encadrement de la porte.

L'invention est applicable à tout type de porte dont l'axe de la poignée et l'axe de la translation circulaire sont parallèles. Ainsi, l'invention peut s'appliquer sur tout ouvrant, par exemple une porte de hangar, de tout bâtiment ou d'engin mobile.

### PRÉSENTATION DES FIGURES

D'autres données, caractéristiques et avantages de la présente invention apparaîtront à la lecture de la description non limitée qui suit, en référence aux figures annexées qui s'étendent dans un plan horizontal et représentent, respectivement :
[Figure 1] une vue partielle de dessus de la porte d'aéronef selon l'invention équipée d'un mode de réalisation préférentiel du mécanisme de verrouillage de la poignée (représentée en transparence) en position de blocage ;
[Figure 2] une vue partielle et de face de la porte de la figure 1 ;
[Figure 3] une vue de dessus de la porte de la figure 1 en position de fermeture dans son encadrement du fuselage ;
[Figure 4] une vue de dessus de la porte de la figure 3 en position de dégagement à la fin de la phase d'échappement des butées latérales (non représentées) avec la poignée en fin de course ;
[Figure 5] une vue partielle de dessus de la porte de la figure 1 au début de la phase de translation circulaire après échappement des butées ;
[Figure 6] une vue partielle de dessus de la porte de la figure 1 au cours de la phase de translation circulaire avec le bras dans une position angulaire intermédiaire ;
[Figure 7] une vue partielle de dessus de la porte de la figure 5 à la fin de la phase de translation circulaire dans sa position de pleine ouverture ;
[Figure 8] une vue de détail de dessus du mécanisme de verrouillage de l'invention dans la position de blocage de la poignée illustrée par la figure 6, et
[Figure 9] une vue schématique de dessus de la cinématique du mécanisme de verrouillage de la poignée de porte de l'invention.

### DESCRIPTION DÉTAILLÉE

Pour plus de clarté, les éléments identiques ou similaires sont repérés par les mêmes signes de référence sur l'ensemble des figures.

Naturellement, les modes de réalisation de l'invention illustrés par les figures présentées ci-dessus et décrites ci-après, ne sont donnés qu'à titre d'exemples non limitatifs. Il est explicitement prévu que l'on puisse proposer et combiner entre eux différents modes pour en proposer d'autres.

L'invention concerne le domaine des portes d'aéronefs et, en particulier, celui des portes équipées de butées latérales (non représentées sur les figures) destinées à assurer la résistance mécanique de leur montage en présence du différentiel de pression régnant, en vol, entre l'intérieur et l'extérieur de la cabine.

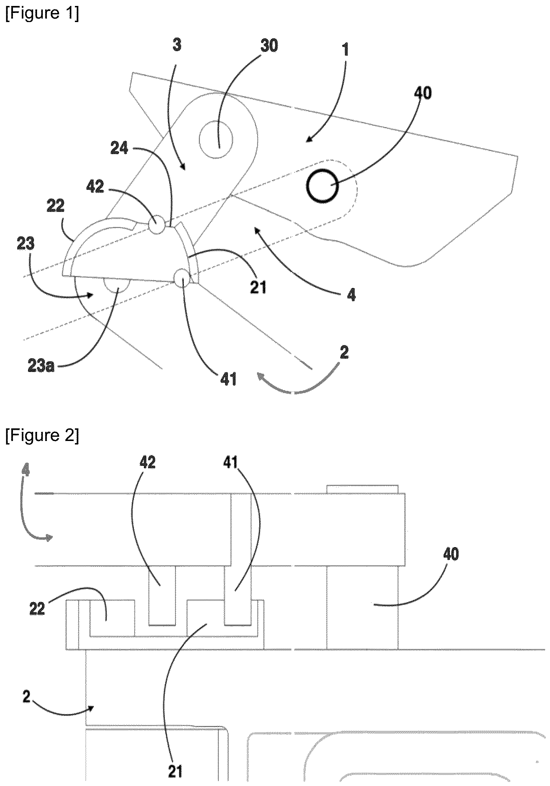

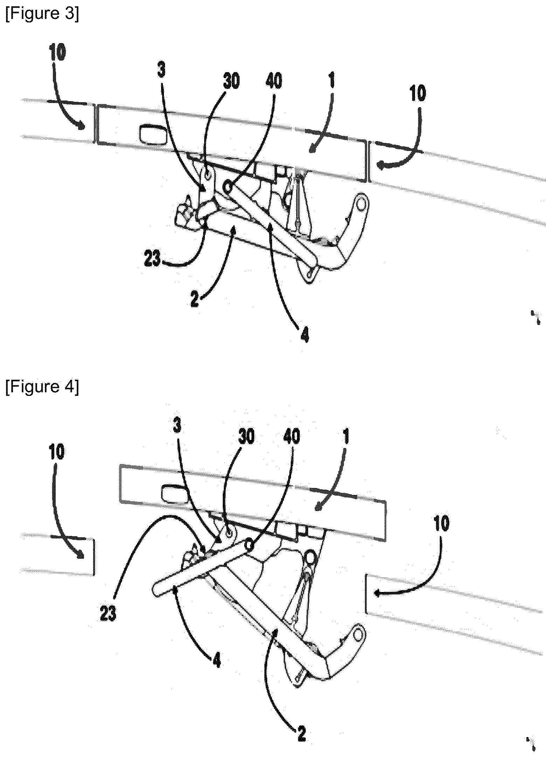

Comme illustré, notamment, par les figures 3 et 4, ces portes 1 sont montées dans des encadrements 10, réalisés dans la paroi de la carlingue du fuselage, et sont pourvues d'un bras de manœuvre 2 monté de façon pivotante sur l'encadrement 10 et couplé, via une charnière 23 d'axe 23a, à un avant-bras 3 articulé sur la porte 1 via un premier axe 30, comme illustré par les figures 1 et 2.

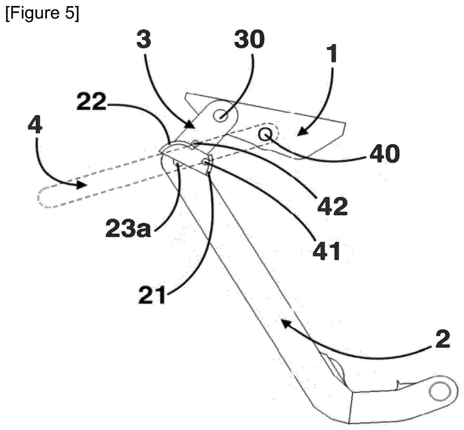

Ainsi, à partir d'une position angulaire intermédiaire de pivotement du bras 2 représentée sur les figures 5 à 7, située après la fin de l'échappement des butées, la porte amorce une translation circulaire autour de l'axe 23a de la charnière.

Les portes 1 supportent, en outre, un second axe 40 permettant la rotation d'au moins une poignée 4 d'actionnement (une poignée intérieure et généralement une poignée extérieure) dans un plan parallèle au plan de pivotement du bras 2 (s'étendant ici de façon horizontale) entre une position de fermeture de la porte 1 (figure 3) et une position de fin de course correspondant à la fin de l'échappement des butées et à l'ouverture partielle de la porte (figure 4).

La cinématique du bras 2, et donc de la porte 1, se décompose en deux phases bien distinctes. Une première phase, qui correspond à l'échappement latéral des butées, est suivie d'une seconde phase de simple rotation accompagnant la translation circulaire de la porte pendant laquelle la poignée 4 doit rester dans une position fixe par rapport à la porte et par rapport au fuselage afin d'éviter toute interaction néfaste avec le libre déplacement de la porte. Dans cette position, l'avant-bras 3 est bloqué et la porte reste parallèle au fuselage.

Afin d'obtenir ce résultat, l'invention propose de munir la porte d'un mécanisme de verrouillage garantissant le blocage de la poignée 4 dans sa position de fin de course pendant la phase de translation circulaire de la porte.

Ce mécanisme, représenté en détails sur les figures 1 et 2, comprend au moins un pion 41 porté par la poignée 4 et au moins une rampe circulaire 21 dont la surface fonctionnelle est concave, qui est portée par la face du bras 2 disposée en vis-à-vis du pion 41 et centrée sur l'axe 23a de la charnière 23.

Dans le mode de réalisation représenté sur les figures, le mécanisme de verrouillage comprend ici un pion dit intérieur 41 et un pion dit extérieur 42 disposés latéralement de part et d'autre de la poignée 4 et coopérant, respectivement, avec une face concave d'une rampe intérieure 21 et une face convexe d'une rampe extérieure 22 portées par le bras 2. Cette solution à deux pions et deux rampes permet de sécuriser le mécanisme en disposant d'un double couple pion-rampe de blocage et d'immobilisation de la poignée 4, en assouplissant les calculs d'approche pour réaliser les coopérations entre les pions et les rampes respectives. Toutefois, ces pions ne sont pas destinés à être actifs en même temps, en particulier, le pion intérieur 41 assure à lui seul le blocage de la poignée au début de la phase de translation circulaire de la porte, tandis que le pion extérieur 42 assure seul le blocage à la fin de cette phase.

Dans une variante non représentée où la poignée 4 ne porte qu'un seul pion, l'invention privilégie la présence du seul pion intérieur 41 et de la seule rampe intérieure 21, ce couple s'adaptant plus directement à une coopération.

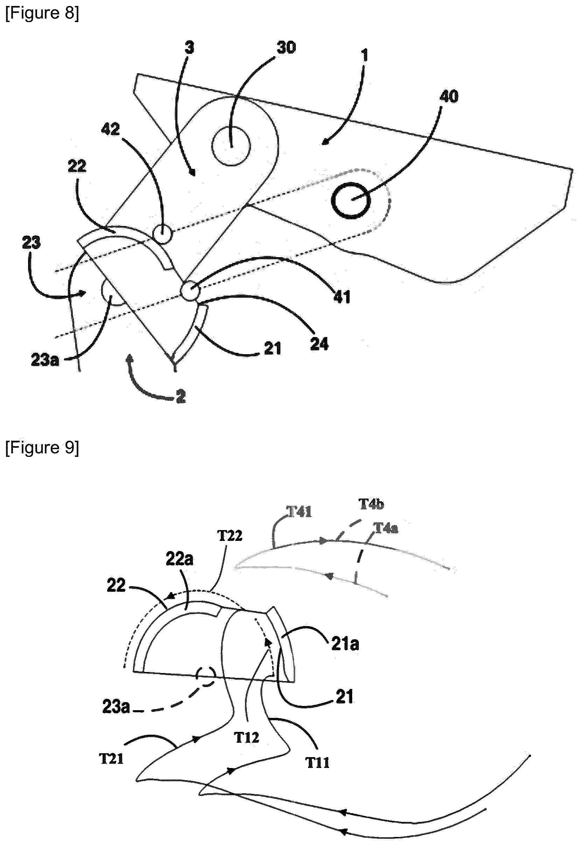

Les pions 41, 42 et les rampes 21, 22 sont positionnés de telle sorte qu'à partir de la position de fin de course de la poignée 4 correspondant à la fin de l'échappement des butées et pendant la translation circulaire de la porte jusqu'à son ouverture complète, la rotation de la poignée 4 se trouve bloquée par un contact d'appui du ou des pions 41, 42 contre les rampes 21, 22 comme illustré par la figure 8.

Plus précisément, le profil circulaire des rampes 21, 22 est tel qu'à partir de la position angulaire intermédiaire de pivotement du bras 2 représentée sur la figure 5, ces rampes viennent couper la trajectoire potentielle des pions 41, 42, en cas de sollicitation de la poignée 4 et lui interdire tout déplacement à partir de sa position stable de fin de course.

En outre, l'invention prévoit que les pions sont disposés entre l'axe 23a de la charnière 23 et l'axe 40 de la poignée 4, comme illustré, notamment, par la figure 1.

Dans le mode de réalisation de l'invention illustré par les figures, la rampe intérieure 21 a un rayon supérieur à celui de la rampe extérieure 22. Les deux rampes sont séparées ici par un congé 24 dont la courbure correspond sensiblement au profil cylindrique des pions 41, 42. Dans d'autres modes de réalisation non représentés et du fait qu'il n'y a aucun contact des pions avec les rampes, l'espace intercalaire entre les rampes peut toutefois être matérialisé par tout autre profil dont la longueur serait supérieure à la longueur du congé 24.

La différence de rayon entre les deux surfaces fonctionnelles des rampes 21, 22 est supérieure ou égale au diamètre des pions 41, 42 majoré du jeu choisi entre les pions et les rampes. Les deux rampes 21, 22 doivent être réalisées de façon à toujours avoir au moins un pion en vis-à-vis d'une rampe (la rampe intérieure concave 21 étant active en premier), tout en laissant le passage libre pour l'éventuel second pion lors de la phase initiale d'échappement des butées.

Dans le mode de réalisation représenté sur les figures, la surface fonctionnelle de chacune des rampes 21, 22 est délimitée ici par la paroi latérale d'une nervure 21a, 22a de profil au moins partiellement cylindrique qui s'étend à la périphérie de l'extrémité du bras 2. Le bord d'entrée de la rampe intérieure 21 est de préférence biseauté mais n'intervient pas dans la cinématique du mécanisme.

Selon une autre variante de réalisation du dispositif de l'invention, les pions seraient portés, non pas par la poignée elle-même, mais par une pièce intermédiaire liée à l'arbre de la poignée.

Selon encore une autre variante, le mécanisme de verrouillage comporte une embase supportant au moins une rampe et dont le profil épouse sensiblement les contours de l'extrémité du bras sur lequel cette embase est rapportée.

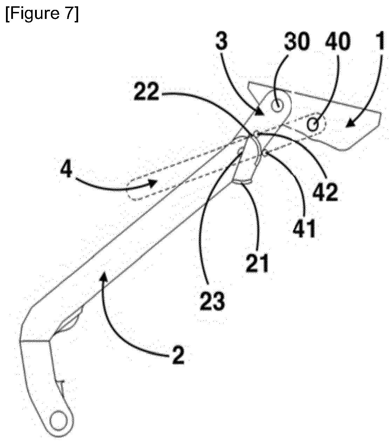

La course angulaire du bras 2 est représentée entre la fin de l'échappement des butées (figures 4 et 5) et l'ouverture complète de la porte 1 (figure 7). La longueur des deux rampes 21, 22 combinées (ou la longueur de la rampe unique dans la variante à un seul pion) est supérieure ou égale à la course angulaire du bras 2 lors de la phase de translation circulaire.

La cinématique du déplacement relatif des rampes 21, 22 du bras 2 par rapport aux pions 41, 42 de la poignée 4 maintenue fixe par rapport à la porte, est illustrée en plan par la figure 9. L'ouverture de la porte de l'invention s'effectue de la manière suivante.

Lors de la phase de translation circulaire de la porte 1, les pions 41, 42 décrivent, relativement au bras 2, des trajectoires circulaires T12, T22 centrées sur l'axe 23a de la charnière entre le bras 2 et l'avant-bras 3. Cette phase est précédée de la phase d'échappement des butées. Ainsi, on tourne tout d'abord la poignée 4 dans le plan horizontal autour de son axe 40 depuis sa position de repos correspondant à la fermeture de la porte (figure 3) jusqu'à sa position de fin de course correspondant à la fin de l'échappement des butées et donc au déverrouillage de la porte 1. C'est donc la rotation seule de la poignée 4 jusqu'à sa position de fin de course qui permet d'effectuer l'échappement des butées (position correspondant à la figure 4).

La trajectoire T41 suivie par l'axe de poignée 40 pendant la phase d'échappement des butées est tracée en figure 9. Lors de cette phase, l'axe 40 de la poignée 4 décrit des portions de trajectoires T4a et T4b correspondant à des pivotements de la porte. Puis, lors de la phase de translation circulaire qui suit, l'axe de la poignée 40 adopte une trajectoire circulaire (non représentée) concentrique à celle des pions.

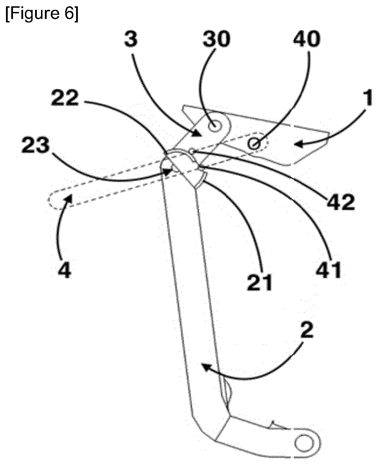

Lors du pivotement libre du bras 2 (figures 5 et 6) pendant toute la translation circulaire de la porte, les pions 41, 42 restent alors en vis-à-vis de leurs rampes respectives 41, 42 après avoir suivis les trajectoires T11 et T21 illustrées en figure 9 lors de la rotation de la poignée 4 jusqu'à la fin de la phase d'échappement des butées. Dans cette dernière position, toute rotation de la poignée 4 est alors bloquée pendant que la porte 1 amorce une trajectoire de translation circulaire jusqu'à ce qu'elle atteigne sa position d'ouverture complète (figure 7).

La translation circulaire de la porte 1 ne s'effectue que via un pivotement autour de l'axe entre le bras 2 et son support (non représenté) sur la carlingue du fuselage (non représentée) et une simple rotation entre le bras 2 et l'avant-bras 3 qui reste fixe par rapport à la porte.

Les pions 41, 42 du mécanisme de verrouillage sont placés sur la poignée 4 de façon à ne se trouver dans leur position fonctionnelle que lorsque la rotation de la poignée 4 est terminée. Durant toute la phase d'échappement des butées de la porte, ces pions n'ont donc aucune utilité et ne sont, ni entravés, ni ne viennent entraver aucune pièce environnante.

A la fin de la rotation de la poignée 4 et de la phase d'échappement des butées, lorsque la porte 1 est prête à débuter sa translation circulaire, les pions 41, 42 arrivent dans leur position finale et fonctionnelle mais se trouvent toujours à distance des rampes 21, 22.

Ainsi, pendant tout le procédé d'ouverture de la porte, les pions 41, 42 et les rampes 21, 22 restent écartés d'un jeu minimal déterminé et sont donc sans contact. Les pions ne viennent en butée contre les rampes qu'en présence d'une éventuelle manipulation forcée, inopinée ou accidentelle, de la poignée 4. Dans cette configuration, l'ensemble des efforts de réaction est ainsi reporté sur l'axe de liaison entre le bras 2 et l'avant-bras 3.

Bien que le mécanisme de l'invention ait été décrit ci-dessus en référence à la poignée intérieure de la porte, le résultat de l'action de ce mécanisme est que la poignée extérieure, lorsqu'elle existe (mais qui n'est pas représentée ici sur les figures), se trouve également bloquée conjointement à la poignée intérieure.

## Revendications

1. Porte (1) d'aéronef à échappement latéral des butées et ouverture par translation circulaire comprenant au moins une poignée (4) d'actionnement et un mécanisme de verrouillage de ladite poignée, ladite porte étant apte à être montée dans un encadrement (10) d'un fuselage et étant pourvue des butées, et, d'une part, d'un bras (2) de manœuvre apte à être monté de façon pivotante sur l'encadrement (10) et couplé, via une charnière (23), à un avant-bras (3) articulé via un premier axe (30) sur la porte et, d'autre part, d'un second axe (40) permettant la rotation de ladite poignée (4) dans un plan parallèle au plan de pivotement du bras entre une position de fermeture de la porte et une position de fin de course correspondant à son ouverture partielle après l'échappement des butées, ledit mécanisme de verrouillage comportant au moins deux pions (41, 42) portés par ladite poignée (4) et au moins deux rampes de profil circulaire (21, 22) portées par la face dudit bras (2) disposées en vis-à-vis des pions et centrées sur ladite charnière (23), les pions et les rampes étant relativement positionnés de sorte qu'à partir de la position de fin de course de la poignée (4) correspondant à la fin de l'échappement des butées et pendant la translation circulaire de la porte jusqu'à son ouverture complète, la rotation de la poignée est bloquée par un contact d'appui des pions (41, 42) contre les rampes (21, 22), **caractérisée en ce que** la poignée (4) porte un pion dit extérieur (42) desdits au moins deux pions et un pion dit intérieur (41) desdits au moins deux pions disposés latéralement de part et d'autre de la poignée et coopérant, respectivement, avec une face convexe d'une rampe extérieure (22) desdites au moins deux rampes et une face concave d'une rampe intérieure (21) desdites au moins deux rampes portées par le bras (2).

2. Porte selon la revendication 1, **caractérisée en ce que** le profil circulaire des rampes intérieure (21) et extérieure (22) présente un diamètre dans une plage de valeurs qui, à partir de la position angulaire intermédiaire de pivotement du bras (2), provoque une coupure de la trajectoire potentielle des pions (41, 42) par les rampes (21, 22), en cas d'action exercée sur la poignée (4).

3. Porte selon l'une quelconque des revendications précédentes, **caractérisée en ce que** lesdits pions (41, 42) sont disposés entre la charnière (23) et l'axe (40) de la poignée (4).

4. Porte selon l'une des revendications précédentes, **caractérisée en ce que** la surface fonctionnelle des rampes (21, 22) est délimitée par une paroi latérale de nervure (21a, 22a) de profil au moins partiellement cylindrique.

5. Porte selon la revendication précédente, **caractérisée en ce que** ladite nervure (21a, 22a) s'étend en périphérie d'extrémité du bras (2).

6. Porte selon l'une des revendications précédentes, **caractérisée en ce que** la rampe intérieure (21) a un rayon supérieur à celui de la rampe extérieure (22).

7. Porte selon la revendication 4 ou 5, **caractérisée en ce que** la différence de rayon entre les deux surfaces fonctionnelles des rampes (21, 22) est supérieure ou égale au diamètre des pions (41, 42) majoré du jeu choisi entre les pions et les rampes.

8. Porte selon l'une des revendications précédentes, **caractérisée en ce que** la longueur angulaire des deux rampes combinées est supérieure ou égale à la course angulaire du bras lors de la phase de translation circulaire de la porte.

9. Porte selon l'une des revendications précédentes, **caractérisée en ce que** ledit mécanisme de verrouillage comporte une embase supportant au moins une rampe (21, 22) et dont le profil épouse sensiblement les contours de l'extrémité du bras (2) sur lequel ladite embase est destinée à être rapportée.

10. Aéronef comportant au moins une porte (1) à échappement latéral des butées selon l'une des revendications précédentes.

11. Procédé d'ouverture réversible d'une porte (1) d'aéronef à échappement latéral des butées selon l'une quelconque des revendications 1 à 9, **caractérisé en ce qu'**on tourne la poignée (4) autour de son axe (40) depuis sa position de repos correspondant à la fermeture de la porte jusqu'à sa position de fin de course correspondant à la fin de la phase d'échappement des butées, puis on effectue un pivotement du bras (2) dans un plan parallèle à celui de la poignée pour assurer, la translation circulaire de la porte jusqu'à ce qu'elle atteigne sa position d'ouverture complète, au moins un pion desdits au moins deux pions se trouvant, pendant ce pivotement, en vis-à-vis des rampes pour bloquer toute rotation de la poignée.

## Patentansprüche

1. Tür (1) eines Flugzeugs mit seitlichem Ausweichen der Anschläge und Öffnen durch kreisförmige Translation, umfassend mindestens einen Bediengriff (4) und einen Verriegelungsmechanismus für den Griff, wobei die Tür geeignet ist, in einem Rahmen (10) eines Rumpfs montiert zu werden, und mit Anschlägen versehen ist und, zum einen, mit einem Betätigungsarm (2), der geeignet ist, schwenkbar an dem Rahmen (10) montiert zu werden, und, über ein Scharnier (23), mit einem Unterarm (3) gekoppelt ist, der über eine erste Achse (30) an die Tür angelenkt ist, und, zum anderen, mit einer zweiten Achse (40), welche die Rotation des Griffs (4) in einer Ebene parallel zu der Schwenkebene des Arms zwischen einer Schließstellung der Tür und einer Endlagenstellung, die ihrem teilweisen Öffnen nach dem Ausweichen der Anschläge entspricht, ermöglicht, wobei der Verriegelungsmechanismus mindestens zwei Stifte (41, 42) umfasst, die von dem Griff (4) getragen werden, und mindestens zwei Rampen mit kreisförmigen Profil (21, 22), die von der Seite des Arms (2) getragen werden, gegenüber den Stiften angeordnet sind und auf das Scharnier (23) zentriert sind, wobei die Stifte und die Rampen relativ positioniert sind, so dass ausgehend von der Endlagenstellung des Griffs (4), die dem Ende des Ausweichens der Anschläge entspricht, und während der kreisförmigen Translation der Tür bis zu ihrem vollständigen Öffnen die Rotation des Griffs durch einen Anlagekontakt der Stifte (41, 42) gegen die Rampen (21, 22) blockiert ist, **dadurch gekennzeichnet, dass** der Griff (4) einen sogenannten äußeren Stift (42) der mindestens zwei Stifte und einen sogenannten inneren Stift (41) der mindestens zwei Stifte trägt, die seitlich beidseits des Griffs angeordnet sind und jeweils mit einer konvexen Seite einer äußeren Rampe (22) der mindestens zwei Rampen und einer konkaven Seite einer inneren Rampe (21) der mindestens zwei von dem Arm (2) getragenen Rampen zusammenwirken.

2. Tür nach Anspruch 1, **dadurch gekennzeichnet, dass** das kreisförmige Profil der inneren Rampe (21) und der äußeren Rampe (22) einen Durchmesser in einem Wertebereich aufweist, der, ausgehend von der intermediären Schwenkwinkelstellung des Arms (2), eine Unterbrechung der potentiellen Trajektorie der Stifte (41, 42) durch die Rampen (21, 22) im Fall einer auf den Griff (4) ausgeübten Kraft erzeugt.

3. Tür nach einem der vorhergehenden Ansprüche, **dadurch gekennzeichnet, dass** die Stifte (41, 42) zwischen dem Scharnier (23) und der Achse (40) des Griffs (4) angeordnet sind.

4. Tür nach einem der vorhergehenden Ansprüche, **dadurch gekennzeichnet, dass** die funktionelle Fläche der Rampen (21, 22) durch eine Seitenwand einer Rippe (21a, 22a) mit mindestens teilweise zylindrischem Profi begrenzt wird.

5. Tür nach dem vorhergehenden Anspruch, **dadurch gekennzeichnet, dass** sich die Rippe (21a, 22a) am Endumfang des Arms (2) erstreckt.

6. Tür nach einem der vorhergehenden Ansprüche, **dadurch gekennzeichnet, dass** die innere Rampe (21) einen Radius hat, der größer als derjenige der äußeren Rampe (22) ist.

7. Tür nach Anspruch 4 oder 5, **dadurch gekennzeichnet, dass** die Radiusdifferenz zwischen den beiden funktionellen Flächen der Rampen (21, 22) größer oder gleich dem Durchmesser der Stifte (41, 42) zuzüglich des zwischen den Stiften und den Rampen gewählten Spiels ist.

8. Tür nach einem der vorhergehenden Ansprüche, **dadurch gekennzeichnet, dass** die Winkellänge der beiden kombinierten Rampen größer oder gleich dem Winkelweg des Arms bei der Phase der kreisförmigen Translation der Tür ist.

9. Tür nach einem der vorhergehenden Ansprüche, **dadurch gekennzeichnet, dass** der Verriegelungsmechanismus einen Sockel umfasst, der mindestens eine Rampe (21, 22) trägt und dessen Profil im Wesentlichen an die Konturen des Endes des Arms (2) angepasst ist, an den der Sockel angesetzt werden soll.

10. Flugzeug, das mindestens eine Tür (1) mit seitlichem Ausweichen der Anschläge nach einem der vorhergehenden Ansprüche umfasst.

11. Verfahren zum reversiblen Öffnen einer Tür (1) eines Flugzeugs mit seitlichem Ausweichen der Anschläge nach einem der Ansprüche 1 bis 9, **dadurch gekennzeichnet, dass** man den Griff (4) um seine Achse (40) von seiner Ruhestellung, die dem Schließen der Tür entspricht, bis in seine Endlagenstellung, die dem Ende der Phase des Ausweichens der Anschläge entspricht, dreht, man dann ein Schwenken des Arms (2) in einer Ebene parallel zu der des Griffs durchführt, um die kreisförmige Translation der Tür zu gewährleisten, bis sie ihre vollständig geöffnete Stellung erreicht, wobei sich mindestens ein Stift der mindestens zwei Stifte während dieses Schwenkens gegenüber den Rampen befindet, um jede Rotation des Griffs zu blockieren.

## Claims

1. An aircraft door (1) that has laterally releasing stops and opens by circular translation, said door comprising at least one actuating handle (4) and a mechanism for locking said handle (4), said door being adapted to be mounted in a frame (10) of a fuselage and provided with stops, and comprising, on the one hand, a maneuvering arm (2) adapted to be mounted so as to pivot on the frame (10) and coupled, via a hinge (23), to a forearm (3) that is articulated via a first pin (30) on the door and, on the other hand, with a second pin (40) that allows said handle (4) to rotate, in a plane parallel to the pivoting plane of the arm, between a closed position of the door and an end-of-travel position corresponding to partial opening thereof after the stops have been released, said locking mechanism having at least two pegs (41, 42) carried by said handle (4) and at least two guideways (21, 22) of circular profile carried by face of said arm *(2), said face being arranged facing the pegs and centered on said hinge (23),* the pegs and the guideways being relatively positioned such that, from the end-of-travel position of the handle (4) corresponding to the end of the stops releasing and during the circular translation of the door until it is fully open, the rotation of the handle is blocked by bearing contact of the pegs (41, 42) against the guideways (21, 22), **characterized in that** the handle (4) carries an outer peg (42) of said at least two pegs and a so-called inner pin (41) of said at least two pegs, arranged laterally on either side of the handle and cooperating respectively with a convex face of an outer ramp (22) of said at least two ramps and with a concave face of an inner ramp (21) of said at least two ramps carried by the arm (2).

2. The door as claimed in claim 1, **characterized in that** the circular profile of the inner (21) and outer (22) guideways has a diameter that is within a range of values and, from the intermediate angular pivoting position of the arm (2), causes the potential path of the pegs (41, 42) to be cut off by the guideways (21, 22), in the event of an action applied to the handle (4).

3. The door as claimed in either one of the preceding claims, **characterized in that** said pegs (41, 42) are arranged between the hinge (23) and the pin (40) of the handle (4).

4. The door as claimed in one of the preceding claims, **characterized in that** the functional surface of the guideways (21, 22) is delimited by a lateral wall of a rib (21a, 22a) with an at least partially cylindrical profile.

5. The door as claimed in the preceding claim, **characterized in that** said rib (21a, 22a) extends around the periphery of the end of the arm (2).

6. The door as claimed in one of the preceding claims, **characterized in that** the inner guideway (21) has a greater radius than that of the outer guideway (22).

7. The door as claimed in claim 4 or 5, **characterized in that** the radius difference between the two functional surfaces of the guideways (21, 22) is greater than or equal to the diameter of the pegs (41, 42) plus the chosen clearance between the pegs and the guideways.

8. The door as claimed in one of the preceding claims, **characterized in that** the angular length of the two guideways combined is greater than or equal to the angular travel of the arm during the circular-translation phase of the door.

9. The door as claimed in one of the preceding claims, **characterized in that** said locking mechanism has a base that supports at least one guideway (21, 22) and the profile of which substantially conforms to the contours of the end of the arm (2) to which said base is intended to be attached.

10. An aircraft having at least one door (1) that has laterally releasing stops as claimed in one of the preceding claims.

11. A method for reversibly opening an aircraft door (1) that has laterally releasing stops as claimed in any one of claims 1 to 9, **characterized in that** the handle (4) is turned about its pin (40) from its rest position corresponding to the closure of the door to its end-of-travel position corresponding to the end of the stop-releasing phase, then the arm (2) is pivoted in a plane parallel to that of the handle in order to provide the circular translation of the door until it reaches its fully open position, at least one of two pegs facing, during this pivoting, the guideways in order to block any rotation of the handle.
